# EUROPÄISCHE PATENTSCHRIFT

(11) **EP 3 126 473 B1**
(45) Veröffentlichungstag und Bekanntmachung des Hinweises auf die Patenterteilung: **23.05.2018**
(21) Anmeldenummer: 15702394.6
(22) Anmeldetag: 16.01.2015
(51) Int. Cl.: C10J 3/00, C10J 3/72, F16L 51/02, F23G 5/20, C10B 1/10, C10B 47/30

(54) **VERFAHREN UND VORRICHTUNG ZUR UMSETZUNG ORGANISCHER MATERIALIEN IN WASSERSTOFFGAS**
PROCESS AND DEVICE FOR REACTING ORGANIC MATERIALS TO GIVE HYDROGEN GAS
PROCÉDÉ ET DISPOSITIF POUR LA TRANSFORMATION DE MATIÈRES ORGANIQUES EN HYDROGÈNE GAZEUX

(30) Priorität: 31.03.2014 EP 14162556
(43) Veröffentlichungstag der Anmeldung: 08.02.2017
(73) Patentinhaber: CleanCarbonConversion Patents AG, 8808 Pfàffikon SZ (CH)
(72) Erfinder: JENEY, Peter, 6300 Zug (CH)
(74) Vertreter: Schneider Feldmann AG Patent- und Markenanwälte
(86) Internationale Anmeldenummer: PCT/EP2015/050767
(87) Internationale Veröffentlichungsnummer: WO 2015/149955

(56) Entgegenhaltungen:
- BE-A- 419 822
- DE-A1-102012 104 796
- US-A- 5 307 765
- US-A- 5 366 596
- US-A1- 2004 237 405

## Beschreibung

Die Erfindung bezieht sich auf Hochtemperaturöfen, die mittels einer Heizung geheizt werden, und auf Verfahren zur Nutzung solcher Öfen, um organische Materialien zu einem Synthesegas umzusetzen. Insbesondere geht es um röhrenförmige Öfen, die zur Verarbeitung von kohlenstoffhaltigen, oder kohlenwasserstoffhaltigen Ausgangsmaterialien, wie Abfallmaterialien, Reststoffen, Biomasse und dergleichen geeignet sind.

Es gibt verschiedene Öfen, die z.B. mit Induktionsspulen geheizt werden. Ein Beispiel ist aus der internationalen Patentanmeldung mit der Publikationsnummer WO09010086A1 bekannt. Ein weiteres Beispiel ist aus dem europäischen Patent EP 1495276 B1 zu entnehmen.

Es hat sich gezeigt, dass sich Probleme mit der Zuverlässigkeit solcher Induktionsöfen ergeben können, wenn sehr hohe Temperaturen über einen längeren Zeitraum auftreten oder wenn sehr aggressive Materialien im Ofen freigesetzt werden. Sauerstoff, der aus dem umzusetzenden Material austritt, kann zum Beispiel die Ofenwand angreifen. Es gibt daher Ansätze, um zu verhindern, dass Sauerstoff überhaupt in das Innere des Ofens gelangt. Ein entsprechendes Beispiel ist aus der internationalen Patentanmeldung mit der Publikationsnummer WO09010100A1 bekannt. Noch aggressiver sind jedoch schwefelhaltige und chlorhaltige Stoffe. Schwefel und Chlor sind häufige Bestandteile von organischen Materialien, z.B. wenn es sich um Reststoff oder dergleichen handelt. Die Patentanmeldung US 5,307,765 beschreibt einen rotierenden Vergasungsreaktor welcher dehnungsfähig ausgebildet ist und der Reaktion Luft und Wasser in Form von Wasserdampf zuführt.

Es geht bei der vorliegenden Erfindung darum Öfen bereitzustellen, die eine verbesserte Stabilität gegenüber aggressiven Materialien auch bei hohen Temperaturen bieten. Außerdem geht es um eine effiziente Umsetzung von kohlenstoffhaltigen Ausgangsmaterialien zu einem Synthesegas, das einen hohen Anteil an Wasserstoffgas enthält.

Eine erfindungsgemäße Vorrichtung, die zum Umsetzen eines organischen Ausgangsmaterials in ein Gas ausgelegt ist, das einen Anteil an Wasserstoff umfasst, weist
- eine Zufuhrvorrichtung,
- ein Ofenrohr mit einer Eingangszone, einem Innenraum, einer Rotationsachse und mit einer Ausgangsseite), und
- eine Wasserzufuhr auf, die im Bereich der Zufuhrvorrichtung oder Eingangszone angeordnet ist, um zu dem Ausgangsmaterial einen Wasseranteil hinzufügen zu können.

Die Zufuhrvorrichtung und das Ofenrohr sind so angeordnet und ausgebildet, dass durch die Zufuhrvorrichtung das Ausgangsmaterial im Bereich der Eingangszone in den Innenraum des Ofenrohrs zuführbar ist und dass ein Feststoffmaterial sowie ein Gasgemisch an der Ausgangsseite des Ofenrohrs abgebbar ist. Die Vorrichtung zeichnet sich dadurch aus, dass das Ofenrohr eine erste Zone und eine zweite Zone umfasst, wobei
- sich die erste Zone in einem Bereich zwischen der Eingangszone und der zweiten Zone befindet,
- sich die zweite Zone in einem Bereich zwischen der ersten Zone und der Ausgangsseite befindet.

Die Vorrichtung zeichnet sich dadurch aus, dass sie einen Kompensator umfasst, der vorzugsweise in einem Übergangsbereich zwischen der ersten Zone und der zweiten Zone angeordnet ist.

Der Kompensator dient bei allen Ausführungsformen zur Kompensation unterschiedlicher thermisch bedingter Ausdehnungen der ersten Zone und der zweiten Zone des Ofenrohrs.

Die Vorrichtung zeichnet sich dadurch aus,
- dass ein Gasführungssystem an der Ausgangsseite des Ofenrohrs angeordnet ist, das zum Weiterleiten des Gasgemischs ausgelegt ist,
- dass ein Gasmonitor im Bereich des Gasführungssystems angeordnet ist, wobei der Gasmonitor dazu ausgelegt ist den Anteil an Wasserstoff in dem Gasgemisch zu überwachen,
wobei die Wasserzufuhr in Abhängigkeit von dem Anteil an Wasserstoff in dem Gasgemisch regelbar ist.

Diese Art von Vorrichtung ermöglicht ein effizientes Umsetzen von Ausgangsmaterial in ein Gasgemisch, das einen hohen Anteil, vorzugweise mehr als 80%, Wasserstoff umfasst (stark wasserstoffhaltiges Gas genannt).

Gemäß Erfindung wird das stark wasserstoffhaltige Gas aus leicht feuchten bis feuchten organischen Edukten in fester Form, d.h. aus organischen Feststoffen, erzeugt. Bei Bedarf können den organischen Feststoffen auf der Eingangsseite auch flüssige Komponenten zugefügt/beigemengt werden.

Da eine Wahl der Einsatzstoffe (Edukte) nicht oder nur in begrenztem Rahmen möglich ist, wird gemäß Erfindung die Zusammensetzung des Synthesegases durch Zugabe von mehr oder weniger Wasser gesteuert, je nach gewünschtem Wasserstoffgehalt im Synthesegas auf der Ausgangsseite des Ofens.

Nach diesen Prozessschritten der Erfindung, die in den beiden hintereinander geschalteten/angeordneten Zonen des Ofens ablaufen, umfasst das verbleibende Synthesegas zu über 70 Volumenprozenten Wasserstoff. Vorzugsweise umfasst das verbleibende Synthesegas zu über 80 Volumenprozenten Wasserstoff.

Ausgangsseitig kann an der Vorrichtung der Erfindung das wasserstoffreiche Gas entnommen und zum Beispiel als Brennstoff genutzt werden.

Die Umsetzung der Einsatzstoffe (Edukte) im Ofen ist mindestens teilweise exotherm. Um die geeigneten Prozessbedingungen in den beiden Zonen des Ofens bereit zu stellen, ist der Ofen mit einer Heizung versehen. Die Heizung ist vorzugsweise bei allen Ausführungsformen außenliegend am Ofenrohr angebracht und sie kann induktiv arbeiten und/oder es kann sich um eine Widerstandsheizung handeln.

Das Ofenrohr der Vorrichtung ist zweiteilig ausgelegt, wobei eine erste Zone durch einen Kompensator von einer zweiten Zone getrennt ist.

Durch eine Zufuhrvorrichtung kann das (organische) Ausgangsmaterial im Bereich der Eingangszone in den Innenraum des Ofenrohrs zugeführt werden. Das Ofenrohr ist vorzugsweise bei allen Ausführungsformen als ein rotationssymmetrisches Ofenrohr ausgelegt in dessen Innenraum Förderelemente angeordnet sind, um das Ausgangsmaterial bei einer Rotationsbewegung des Ofenrohrs um die Rotationsachse in Richtung der Ausgangsseite des Ofenrohrs zu fördern.

Die Hochtemperatur-Vorrichtung umfasst eine im Bereich des Umfangs des Ofenrohrs angeordnete (Widerstands- oder Induktions-)Heizung, die im Ofenrohr mindestens eine heiße Zone (zweite Zone) und eine weniger heiße Zone (erste Zone) vorgibt. Von der Eingangsseite aus betrachtet folgt die heiße Zone nach der weniger heißen Zone.

Die Heizung ist gemäß Erfindung so ausgelegt, dass eine Temperatur im Innenraum des Ofenrohrs im Bereich der heißen Zone erzielbar ist, die oberhalb von 1000 Grad Celsius liegt und die vorzugsweise im Bereich zwischen 1100 Grad Celsius und 1300 Grad Celsius liegt.

Die Heizung ist gemäß Erfindung so ausgelegt, dass eine Temperatur im Innenraum des Ofenrohrs im Bereich der weniger heißen Zone erzielbar ist, die zwischen 300 Grad Celsius und 900 Grad Celsius liegt, wobei diese Temperatur vorzugsweise zwischen 600 Grad Celsius und 850 Grad Celsius liegt.

Das erfindungsgemäße Verfahren zeichnet sich dadurch aus, dass eine Umsetzung organischer Ausgangsmaterialien zu einem gasförmigen Produkt in der Vorrichtung erfolgt. Diese Umsetzung verläuft stufenweise im Innenraum des Ofenrohrs der Vorrichtung. Es wird das Ausgangsmaterial auf einer Eingangsseite/-Zone in den Innenraum eingebracht. Das Ofenrohr wird um eine Rotationsachse gedreht, um das Ausgangsmaterial im Innenraum von der Eingangsseite zu der Ausgangsseite fördern zu können. Gemäß Erfindung durchwandert das Ausgangsmaterial während dem Fördern durch den Innenraum und während der Umsetzung eine 1. Temperaturzone mit einer Betriebstemperatur zwischen 300 Grad Celsius und 900 Grad Celsius (vorzugsweise zwischen 600 Grad Celsius und 850 Grad Celsius), die gefolgt wird von einer 2. Temperaturzone mit einer Betriebstemperatur oberhalb von 1000°C (vorzugsweise zwischen 1100 Grad Celsius und 1300 Grad Celsius).

Die Erfindung bezieht sich insbesondere auf Vorrichtungen, die mittels einer (zweiteiligen) Widerstandsheizung geheizt werden, und auf Verfahren zur Nutzung solcher Vorrichtungen, um organische Materialien zu Wasserstoffgas umzusetzen. Insbesondere geht es um röhrenförmige Öfen, die zur Verarbeitung von kohlenstoffhaltigen, oder kohlenwasserstoffhaltigen Ausgangsmaterialien, wie Abfallmaterialien, Reststoffen, Biomasse und dergleichen geeignet sind.

Im Folgenden wird die Erfindung anhand von Ausführungsbeispielen und mit Bezug auf eine Zeichnung erläutert. Es zeigt:
- Fig. 1: eine schematische Seitenansicht einer bevorzugten Ausführungsform einer erfindungsgemäßen Vorrichtung;
- Fig. 2: eine schematische Seitenansicht eines Ofens einer bevorzugten Ausführungsform einer erfindungsgemäßen Vorrichtung;
- Fig. 3: eine schematische Seitenansicht eines Ofens samt Zufuhrvorrichtung einer bevorzugten Ausführungsform einer erfindungsgemäßen Vorrichtung;
- Fig. 4A: eine schematische Seitenansicht eines Längenabschnitts eines Ofens einer bevorzugten Ausführungsform einer erfindungsgemäßen Vorrichtung;
- Fig. 4B: eine schematische Vergrößerung des Bereichs B der Fig. 4A.

Im Folgenden werden Orts- und Richtungsangaben verwendet, um die Erfindung besser beschreiben zu können. Diese Angaben beziehen sich auf die jeweilige Einbausituation und sollen daher nicht als Einschränkung verstanden werden.

Es geht bei der Erfindung um die Verarbeitung, respektive Umsetzung von organischen Ausgangsmaterialien 1, d.h. von kohlenstoffhaltigen, oder kohlenwasserstoffhaltigen Ausgangsmaterialien 1, wie Abfallmaterialien, Reststoffen, Biomasse und dergleichen. Bei dieser Verarbeitung, respektive Umsetzung entsteht mindestens ein Gasgemisch 3 und ein Feststoffmaterial 2. Vorzugsweise entsteht Synthesegas als Gasgemisch 3, das Kohlenmonoxid CO und Wasserstoff H₂ umfasst. Das Synthesegas umfasst je nach Prozessführung einen großen Anteil an Wasserstoffgas 4. Vorzugsweise beträgt der Anteil des Wasserstoffgases mehr als 80%.

Das Gasgemisch 3 kann auch geringe Anteile an CO₂ und nicht umgesetztes Methan (CH₄) enthalten.

Gemäß Erfindung liegt das H₂/CO-Verhältnis je nach Ausgangsstoff und Betriebsbedingungen oberhalb von 4 und besonders vorzugsweise oberhalb von 5. Wichtig ist die Feststellung, dass die Erfindung keine CO₂-Rückführung braucht, um einen hohen Wasserstoffanteil zu erzeugen.

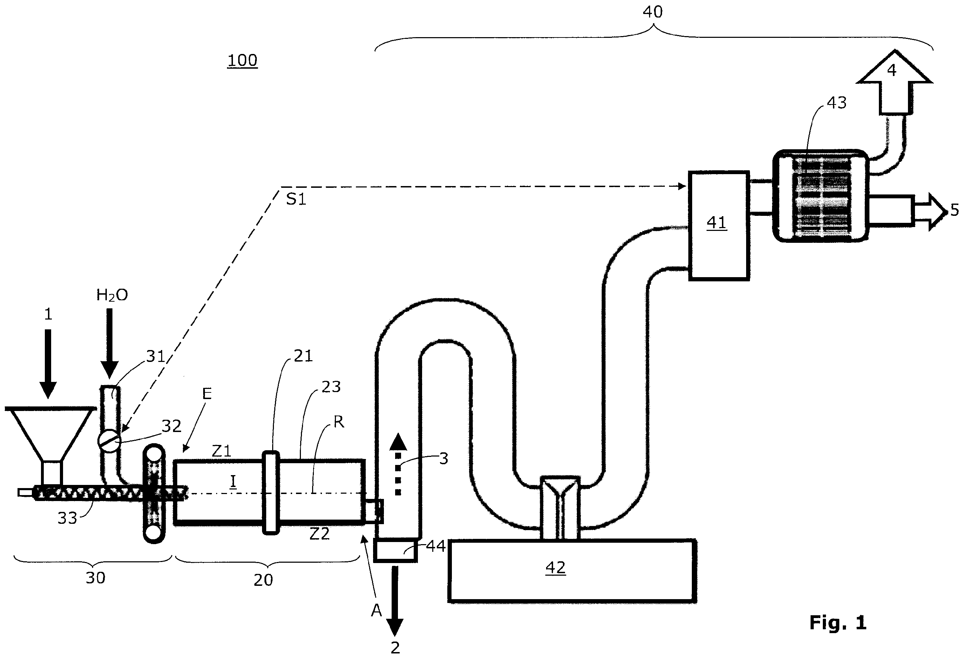

Im Folgenden werden Details der Erfindung anhand einer bevorzugten Ausführungsform und mit Bezug auf Fig. 1 erläutert. Weitere Ausführungsformen werden von dieser bevorzugten Ausführungsform abgeleitet.

Die erfindungsgemäße Hochtemperatur-Vorrichtung 100 ist speziell zum Umsetzen eines organischen Ausgangsmaterials 1 ausgelegt. Die Vorrichtung 100 umfasst eine Zufuhrvorrichtung 30 und ein rotationssymmetrisches Ofenrohr 20 mit einer Rotationsachse R. Die Rotationsachse R ist typischerweise horizontal oder leicht schräg angeordnet. Der Neigungswinkel kann im Falle einer schrägen Anordnung bis zu 45 Grad betragen. Bei einer schrägen Anordnung steht mindestens das Ofenrohr 20 schräg, wobei die Ausgangsseite A höher liegt als die Eingangszone E. Bevorzugt ist aber die horizontale Ausrichtung der Rotationsachse R, wie in Fig. 1 gezeigt.

Zur Umsetzung von organischen Ausgangsmaterialien 1 in Wasserstoffgas 4, wird im Bereich der Eingangszone E eine Wasser- oder Dampfzufuhr 31 angeordnet. Diese Zufuhr 31 sitzt vorzugsweise außerhalb des Ofenrohrs 20 vor der Eingangszone E, wie in Fig. 1 angedeutet.

Durch eine Regelung der Wasser- oder Wasserdampfzufuhr wird das Ausgangsmaterial 1 in feuchter Form in den Innenraum I des Ofenrohrs 20 zugeführt.

Die Ausführungsform nach Fig. 1 weist eine Regelung bzw. einen Regelkreis auf, der ausgangsseitig einen Gasmonitor 41 im Bereich eines Gasführungssystems 40 umfasst. Der Gasmonitor 41 ermöglicht es direkt oder indirekt (z.B. über einen zwischengeschalteten Rechner) ein Stellsignal S1 an die Zufuhr 31 zu liefern. Mit diesem Stellsignal S1, das auch als Regelgrösse bezeichnet wird, kann z.B. mittels eines Ventils, einer Pumpe oder eine Klappe (hier als Stellglied 32 bezeichnet) die Menge der Wasser- oder Wasserdampfzufuhr geregelt werden.

Als Gasmonitor 41 kann bei allen Ausführungsformen z.B. ein Gasmonitor 41 zum Einsatz kommen, der einen elektrochemischen Wasserstoff-Sensor oder eine elektrochemischen Wasserstoff-Messzelle umfasst.

Der Gasmonitor 41 kann bei allen Ausführungsformen z.B. ein Messsignal liefern, das eine Aussage über den Wasserstoffanteil im Gasgemisch 3 zulässt. Dieses Messsignal kann direkt oder indirekt, z.B. über einen Rechner, eingesetzt werden, um eine Regelgröße S1 bereitzustellen, die über ein Stellglied 32 die Menge des zugeführten Wassers beeinflusst.

Um eine effiziente Umsetzung des Ausgangsmaterials 1 zu einem Gasgemisch 3 mit hohem Wasserstoffanteil 4 zu ermöglichen, muss einerseits eine ausreichende Menge an Wasser eingangsseitig zugefügt werden. Andererseits muss eine zweistufige Umsetzung erfolgen, bei der das Ausgangsmaterial 1 eine erste Zone Z1 mit einer weniger heißen Temperatur T1 und dann eine zweite Zone Z2 mit einer heißeren Temperatur T2 durchläuft.

Es gilt T2 >> T1. Vorzugsweise liegt T1 zwischen 300 Grad Celsius und 900 Grad Celsius. Besonders vorzugsweise liegt T1 zwischen 600 Grad Celsius und 850 Grad Celsius. Vorzugsweise liegt T2 oberhalb von 1000°C. Besonders vorzugsweise liegt T2 zwischen 1100 Grad Celsius und 1300 Grad Celsius.

Untersuchungen und Testläufe haben ergeben, dass aus dem angefeuchteten Ausgangsmaterial 1 bei der zweistufigen Temperaturbehandlung in den genannten Temperaturbereichen aggressive Komponenten ergeben, die das Material des Ofenrohrs 20 angreifen. Daher müssen gemäß Erfindung spezielle Materialien eingesetzt werden, wobei sich das Material der ersten Zone Z1 von dem Material der zweiten Zone Z2 unterscheidet.

Gemäß Erfindung muss jede der Zonen Z1 und Z2 für sich betrachtet optimiert werden, um ein Ofenrohr 20 zu erhalten, das dauerhaft einsetzbar ist ohne größeren Schaden zu nehmen.

Das Ofenrohr 20 umfasst vorzugsweise bei allen Ausführungsformen im Bereich der ersten Zone Z1 ein temperaturfestes Metall oder eine temperaturfeste Metalllegierung, wobei vorzugsweise eine Nickel-Legierung zum Einsatz kommt.

Für die Zwecke der vorliegenden Schrift ist eine Nickel-Legierung eine Legierung, die in Gewichtsprozent betrachtet mehr Nickel als andere Metallelemente umfasst. Vorzugsweise kommen Nickel-Legierungen zum Einsatz, die korrosions- und oxidationsbeständig in einem Temperaturbereich bis 900 Grad Celsius sind. Für den Einsatz als Material im Bereich der ersten Zone Z1 des Ofenrohrs 20 ist auch die Widerstandfähigkeit gegenüber aggressiven Gaskomponenten wichtig. Vor allem muss das Material gegenüber Halogen-Ionen und/oder Schwefelwasserstoff resistent sein.

Neben Nickel als Hauptkomponente ist vorzugsweise bei allen Ausführungsformen Chrom eine weitere wichtige Nebenkomponente des Materials der ersten Zone Z1. Zusätzlich können eines oder mehrere der folgenden Elemente in der Nickel-Legierung enthalten sein: Eisen, Molybdän, Niob, Kobalt, Mangan, Kupfer, Aluminium, Titan, Silizium, Kohlenstoff, Schwefel, Phosphor oder Bor.

Besonders geeignet ist Inconel® oder eine Inconel-Legierung der Firma Special Metals Corporation.

Das Ofenrohr 20 umfasst vorzugsweise bei allen Ausführungsformen im Bereich der zweiten Zone Z2 ein Material, das als Schutz gegen aggressive Gase und die Hochtemperatur T2 im Innenraum I des Ofenrohrs 20 dient.

Das Ofenrohr 20 umfasst vorzugsweise im Bereich der zweiten Zone Z2
- ein temperaturfestes Metall mit hochtemperaturfester Keramikbeschichtung,
- ein temperaturfestes Metall mit hochtemperaturfester Keramikarmierung,
- ein temperaturfestes Metall mit hochtemperaturfestem Keramikzuschlag,
- einen hochtemperaturfesten Verbund aus Metall und Keramik, oder
- eine hochtemperaturfeste Keramik,
wobei die Keramik vorzugsweise eines der Bestandteile der folgenden Gruppe umfasst: Aluminiumoxid (Al₂O₃), Siliziumkarbid (SiC), Siliziumnitrid (Si₃N₄).

Das Ofenrohr 20 kann bei allen Ausführungsformen entweder einstückig (z.B. ein Rohr, das innen unterschiedlich beschichtet ist) oder zweistückig (z.B. ein Längenabschnitt aus Keramik und ein Längenabschnitt aus temperaturfestem Metall) ausgelegt sein.

Die genannten Materialen des Ofenrohrs 20 sind sehr unterschiedlich und es hat sich gezeigt, dass sie nicht dauerhaft beständig in einem Ofenrohr miteinander kombiniert werden können. Die Erfindung setzt daher einen Kompensator 21 ein, der, wie z.B. in Fig. 1 gezeigt, die erste Zone Z1 von der zweiten Zone Z2 trennen kann. Der Kompensator 21 kann aber, je nach Bauform, auch an einem anderen Ort angeordnet sein.

Der Kompensator 21 der Erfindung ist vorzugsweise bei allen Ausführungsformen so ausgelegt, dass er im Wesentlichen zwei Aufgaben erfüllt. Erstens dient der Kompensator 21 zum Überbrücken oder Ausgleichen von mechanischen Spannungen, die sich zwischen der ersten Zone Z1 und der zweiten Zone Z2 (z.B. bei einem zweistückigen Ofenrohr) des Ofenrohrs 20 aufgrund großer Temperaturunterschiede und unterschiedlicher Ausdehnungskoeffizienten der eingesetzten Materialien ergeben. Zweitens bildet der Kompensator 21 vorzugsweise bei allen Ausführungsformen eine gasdichte Verbindung zwischen den Zonen Z1 und Z2. Der Kompensator 21 ist daher vorzugsweise bei allen Ausführungsformen hochtemperaturbeständig, flexibel und gasdicht ausgelegt.

Der Kompensator 21 umfasst vorzugsweise bei allen Ausführungsformen
- Silikat wie z.B. ein natürliches Glimmermineral, vorzugsweise Phlogopit-Glimmer, oder ein Kunstglimmer,
- eine anorganisch gebundene Glas/Glimmer-Kombination,
- ein Grafitmaterial,
wobei das entsprechende Material vorzugsweise bei allen Ausführungsformen eine Schmelztemperatur hat, die oberhalb von 1200 Grad Celsius liegt.

Vorzugsweise ist bei allen Ausführungsformen das im letzten Absatz genannte Material in einem Bereich zwischen dem Material der ersten Zone Z1 und dem Material der zweiten Zone Z2 angeordnet.

Vorzugsweise umfasst der Kompensator 21 bei allen Ausführungsformen zusätzlich oder alternativ zu dem Silikat, der Glas/Glimmer-Kombination oder dem Grafitmaterial ein keramisches Textil.

Vorzugsweise kommen bei allen Ausführungsformen keramische Textilmatten als Bestandteil des Kompensators 21 zum Einsatz. Besonders bevorzugt sind Textilmatten mit Metalloxidfasern. Ganz besonders bevorzugt sind Textilmatten der Firma 3M, die unter dem Namen Nextel™ angeboten werden, wobei sie für eine Einsatztemperatur von oberhalb 1200 Grad Celsius ausgelegt sein sollten.

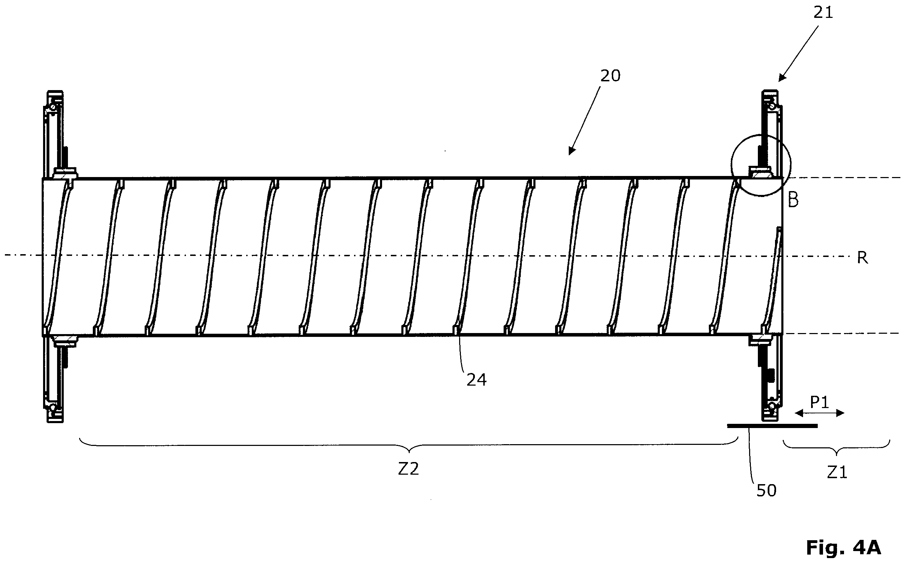

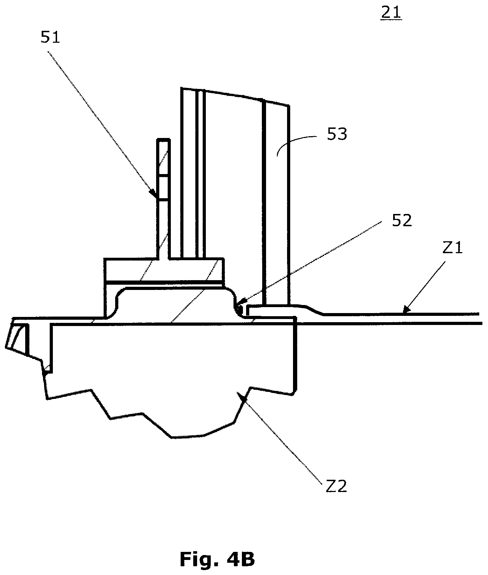

Vorzugsweise ist der Kompensator 21 bei allen Ausführungsformen so ausgelegt, wie in den Figuren 4A und 4B gezeigt.

Der Kompensator 21 der Figuren 4A und 4B ist mit dem Ofenrohr 20 verbunden und er ist gleitend in Bezug zu einem stationären Auflager 50 ausgelegt/gelagert. Im Falle von thermisch bedingten Ausdehnungen kommt es zu einer Verschiebung des Kompensators 21 relativ zu dem Auflager 50, wie in Fig. 4A durch den Doppelpfeil P1 gezeigt.

Vorzugsweise umfasst der Kompensator 21 bei allen Ausführungsformen eine Stahlhalterung oder einen Stahlring 51, der auf das Ofenrohr 20 aufgesetzt oder aufgeschrumpft ist. Die Stahlhalterung oder der Stahlring 51 umgreift das Ofenrohr 20 vorzugsweise um 360 Grad.

Vorzugsweise umfasst der Kompensator 21 und/oder das Ofenrohr 20 im Übergangsbereich zwischen den Zonen Z1 und Z2 einen Keramikaufsatz oder - ring, der vorzugsweise bei allen Ausführungsformen das Ofenrohr 20 um 360 Grad umgreift.

Vorzugsweise umfasst der Kompensator 21 und/oder das Ofenrohr 20 im Übergangsbereich zwischen den Zonen Z1 und Z2 einen Drehkranz 53, der direkt oder indirekt innig mit dem Ofenrohr 20 verbunden ist, wobei der Drehkranz 53 mit seinem äusseren Umfang gleitend parallel zur Rotationsachse R in Bezug auf ein Auflager 50 gelagert ist.

Vorzugsweise ist das Ofenrohr 20 bei allen Ausführungsformen im Bereich der Eingangszone E und/oder der Ausgangsseite A gleitend gelagert, um thermisch bedingte Längenausdehnungen des Ofenrohrs 20 parallel zur Rotationsachse R zu ermöglichen.

Vorzugsweise ist das Ofenrohr 20 bei allen Ausführungsformen im Bereich der Ausgangsseite A gleitend so gelagert, dass das Ofenrohr 20 im Bereich der Ausgangsseite A im Falle einer Längenausdehnung parallel zur Rotationsachse R ein Stück weit in das Gasführungssystem 40 eindringt.

Vorzugsweise kommt bei allen Ausführungsformen im Bereich des Gasführungssystems 40 ein Gaswäscher 42 zum Einsatz, der dazu ausgelegt ist Verschmutzungen und/oder Stickoxide und/oder Schwermetalle aus dem Gasgemisch 3 abzutrennen.

Besonders geeignet sind Gaswäscher 42, die zur Syngas-Reinigung ausgelegt sind. Solche Gaswäscher 42 sind bekannt.

Es kann z.B. das Acid Gas Removal (AGR) Verfahren der Firma Air Liquide eingesetzt werden. Bei diesem Verfahren handelt es sich um eine saure Gaswäsche. Es kann aber z.B. auch das Rectisol® eingesetzt werden, das gekühltes Methanol als Lösungsmittel für eine physikalische Absorption einsetzt.

Vorzugsweise kommt bei allen Ausführungsformen im Bereich des Gasführungssystems 40 eine Vorrichtung 43 zur Abtrennung von Wasserstoff zum Einsatz, auf deren Ausgangsseite ein Wasserstoffgas 4 mit einer Wasserstoffkonzentration von mehr als 70 (vorzugsweise mehr als 80%) und ein Restgas 5 bereitgestellt werden.

Die Vorrichtung 43 kann zum Beispiel (selektive Gastrenn-)Membranen zur Wasserstofftrennung umfassen. Vorrichtungen 43 zur Wasserstofftrennung sind bekannt.

Fig. 1 zeigt eine erste beispielhafte Vorrichtung 100 der Erfindung. Die Vorrichtung 100 umfasst, von links nach rechts betrachtet, die folgenden Komponenten und Elemente:
- Einen optionalen Trichter 7, der für das Zuführen des Ausgangsmaterials/ Einsatzstoffs 1 ausgelegt ist.
- Ein Förderelement 33 (z.B. mit einer innenliegenden Schnecke oder einem Förderband), um das Ausgangsmaterial/den Einsatzstoff 1 in den Innenraum des Ofens 20 zu fördern.
- Eine Wasser- (oder Dampf)zufuhr 31, die hier im Bereich des Förderelements 33 angeordnet ist und die ein Stellglied 32 zum Regeln Wassermenge umfasst.
- Ein Lagerelement/Lagerung/Drehkranz 35, um das Ofenrohr 20 drehbar zu lagern.
- Eine Eingangszone E zum Einbringen des Ausgangsmaterials/ Einsatzstoffs 1.
- Das Ofenrohr 20 umfasst eine erste Zone Z1 und eine zweite Zone Z2, die durch einen Kompensator 21 räumlich voneinander getrennt sind.
- Eine Heizung 27 (nicht gezeigt), die vorzugsweise in oder an der Wandung 23 des Ofens 20 angeordnet ist.
- Eine Ausgangsseite A, die zum Abgeben eines Feststoffmaterials 2 (als saubere Anorganik) und eines Gasgemischs 3 ausgelegt ist.
- Im Bereich der Ausgangsseite A kann z.B. ein Abscheider 44 für das Abtrennen des Feststoffmaterials 2 sitzen.
- Im Bereich der Ausgangsseite A befindet sich ein Gasführungssystem 40, das zum Wegleiten des Gasgemischs 3 ausgelegt ist.
- Im Bereich des Gasführungssystems 40 kann ein Gaswäscher 42 angeordnet sein.
- Im Bereich des Gasführungssystems 40 ist ein Gasmonitor 41 angeordnet, um die momentan vorhandene Wasserstoffmenge (den Wasserstoffanteil) ermitteln zu können.
- Der Gasmonitor 41 ist direkt oder indirekt mit dem Stellglied 32 verbunden (.B. über eine Signalleitung).
- Im Bereich des Gasführungssystems 40 kann eine Vorrichtung 43 zur Abtrennung von Wasserstoff angeordnet sein. Diese Vorrichtung 43 sitzt in Strömungsrichtung betrachtet hinter dem Gasmonitor 41.

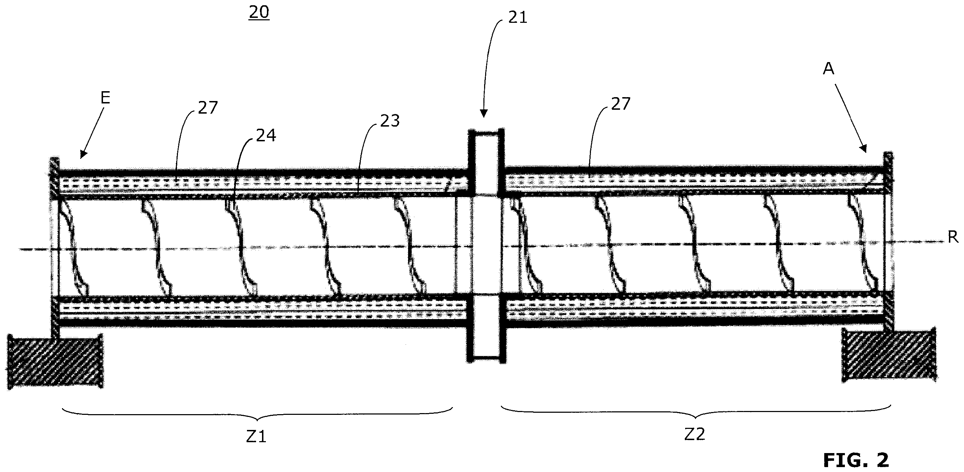

Fig. 2 zeigt einen weiteren beispielhaften Ofen 20, der Teil einer Vorrichtung 100 der Erfindung sein kann. Der Ofen 20 umfasst, von links nach rechts betrachtet, die folgenden Komponenten und Elemente:
- Eine Eingangszone E zum Einbringen des Ausgangsmaterials/ Einsatzstoffs 1.
- eine erste Zone Z1 und eine zweite Zone Z2, die durch einen Kompensator 21 räumlich voneinander getrennt sind.
- Eine Heizung 27, die hier an der Wandung 23 des Ofens 20 angeordnet ist. Die Heizung 27 kann im Bereich der zweiten Zone Z2 eine höhere Heizleistung haben als im Bereich der ersten Zone Z1. Da die Prozesse, die im Innenraum I ablaufen, mindesten teilweise exotherm sind, muss die Heizleistung im Bereich der zweiten Zone Z2 nicht bei allen Ausführungsformen höher sein.
- Innenliegende Förderschaufeln 24 im Ofen 20.
- Eine Ausgangsseite A, die zum Abgeben eines Feststoffmaterials 2 (als saubere Anorganik) und eines Gasgemischs 3 ausgelegt ist.
- Förderrollen 36 und/oder einen Drehkranz, zum Drehantreiben des Ofens 20.

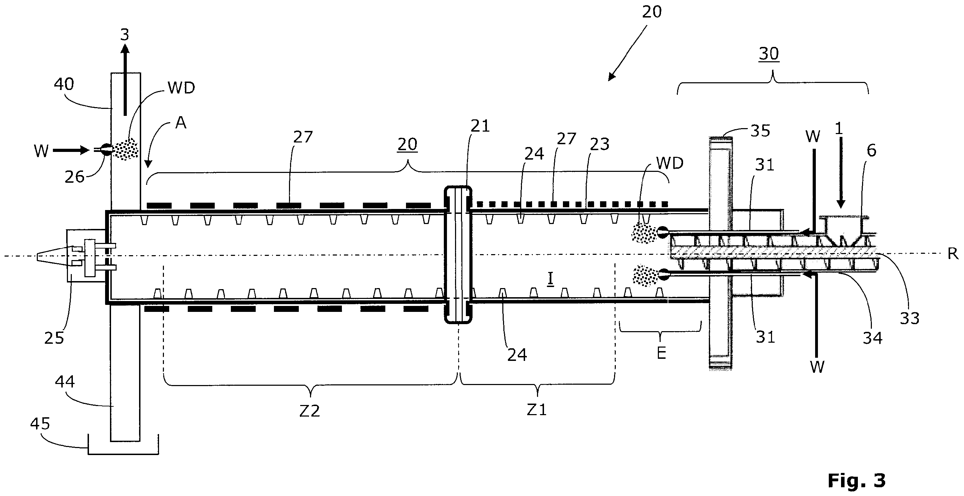

Fig. 3 zeigt einen weiteren beispielhaften Ofen 20, der Teil einer Vorrichtung 100 der Erfindung sein kann. Der Ofen 20 umfasst, von rechts nach links betrachtet, die folgenden Komponenten und Elemente:
- Ein Förderelement 33 (z.B. mit einer innenliegenden Schnecke oder einem Förderband), das Teil einer Zufuhrvorrichtung 30 ist und das Ausgangsmaterial/den Einsatzstoff 1 in den Innenraum des Ofens 20 fördert. Hier kann das Ausgangsmaterial/der Einsatzstoff 1 z.B. von oben her durch eine Materialzufuhr 6 in das Förderelement 33 gelangen.
- Ein Lagerelement/Lagerung 35, um das Ofenrohr 20 drehbar zu lagern.
- Eine Eingangszone E zum Einbringen des Ausgangsmaterials/ Einsatzstoffs 1.
- Eine Wasser- (oder Dampf)zufuhr 31, die hier im Bereich des Förderelements 33 angeordnet ist und die eine Wassermenge W (als Wasserdampf WD) direkt in den Innenraum I des Ofens 20 einbringt.
- Das Ofenrohr 20 umfasst eine erste Zone Z1 und eine zweite Zone Z2, die durch einen Kompensator 21 räumlich voneinander getrennt sind.
- Eine Heizung 27, die vorzugsweise in oder an der Wandung 23 des Ofens 20 angeordnet ist. Die Heizung 27 kann im Bereich der zweiten Zone Z2 eine höhere Heizleistung haben als im Bereich der ersten Zone Z1. Da die Prozesse, die im Innenraum I ablaufen, mindesten teilweise exotherm sind, muss die Heizleistung im Bereich der zweiten Zone Z2 nicht bei allen Ausführungsformen höher sein.
- Eine Ausgangsseite A, die zum Abgeben eines Feststoffmaterials 2 (als saubere Anorganik) und eines Gasgemischs 3 ausgelegt ist.
- Ein Lagerelement/Lagerung 25, um das Ofenrohr 20 drehbar zu lagern.
- Ein Gasführungssystem 40 zum Ableiten des Gasgemischs 3.
- Im Bereich der Ausgangsseite A oder am Gasführungssystem 40 kann optional eine Wasser- (oder Dampf)zufuhr 26 (z.B. eine Wasserdüse) angeordnet sein.
- Im Bereich der Ausgangsseite A können z.B. ein Abscheider 44 für das Abtrennen des Feststoffmaterials 2 und ein Auffangbehälter 45 sitzen.

In einer bevorzugten Ausführungsform ist die Vorrichtung dadurch gekennzeichnet, dass im Bereich des Gasführungssystems 40, in Strömungsrichtung betrachtet hinter dem Gasmonitor 41, eine Vorrichtung 43 zur Abtrennung von Wasserstoff angeordnet ist, auf deren Ausgangsseite ein Wasserstoffgas 4 mit einer Wasserstoffkonzentration von mehr als 80% und ein Restgas 5 bereit gestellt werden.

In einer weiteren Ausführungsform ist die Vorrichtung dadurch gekennzeichnet, dass im Bereich der Ausgangsseite A des Ofenrohrs 20 , vorzugsweise im Bereich des Gasführungssystems 40 , ein Abscheider 44 für Feststoffe angeordnet ist.

In einer anderen Variante ist die Vorrichtung dadurch gekennzeichnet, dass die Vorrichtung 100 mit kohlenstoffhaltigen, oder kohlenwasserstoffhaltigen Ausgangsmaterialien 1 beschickt wird und dass ausgangsseitig ein wasserstoffhaltiges Gasgemisch 3 entnehmbar ist.

| | |
|---|---|
| Ausgangsmaterial / Einsatzstoff | 1 |
| Feststoffmaterial / saubere Anorganik | 2 |
| Gasgemisch | 3 |
| Wasserstoffgas | 4 |
| Restgas | 5 |
| Materialzufuhr | 6 |
| Trichter | 7 |
| | |
| Ofenrohr | 20 |
| Kompensator | 21 |
| Rohrwandung | 23 |
| (Gegen-)Lagerung | 25 |
| Wasser- (oder Dampf)zufuhr | 26 |
| Vorheizung | 27.1 |
| Hauptheizunq | 27.2 |
| | |
| Zufuhrvorrichtung | 30 |
| Wasser- (oder Dampf)zufuhr | 31 |
| Stellglied | 32 |
| Förderelement/Schnecke | 33 |
| Rohr | 34 |
| Lagerelement/Lagerung/Drehkranz | 35 |
| Förderrollen | 36 |
| | |
| Gasführungssystem | 40 |
| Gasmonitor | 41 |
| Gaswäscher | 42 |
| Vorrichtung zur Abtrennung von Wasserstoff | 43 |
| Abscheider | 44 |
| Auffangbehälter | 45 |
| | |
| Auflager | 50 |
| Stahlhalterung oder Stahlring | 51 |
| Keramikaufsatz oder -ring | 52 |
| Drehkranz | 53 |
| | |
| Vorrichtung | 100 |
| | |
| Ausgangsseite | A |
| Eingangszone | E |
| Innenraum | I |
| Doppelpfeil | P1 |
| Rotationsachse | R |
| Regelgrösse | S1 |
| Wasseranteil (Wasser- oder Wasserdampf) | W |
| Wasserdampf | WD |
| erste Zone | Z1 |
| zweite Zone | Z2 |

## Patentansprüche

1. Vorrichtung (100) zum Umsetzen eines organischen Ausgangsmaterials (1) in ein Gas, das einen Anteil an Wasserstoff umfasst, mit:
• einer Zufuhrvorrichtung (30),
• einem Ofenrohr (20) mit einer Eingangszone (E), einem Innenraum (I), einer Rotationsachse (R) und mit einer Ausgangsseite (A),
• einer Wasserzufuhr (31), die im Bereich der Zufuhrvorrichtung (30) oder Eingangszone (E) angeordnet ist, um zu dem Ausgangsmaterial (1) einen Wasseranteil (W) hinzufügen zu können,
wobei die Zufuhrvorrichtung (30) und das Ofenrohr (20) so angeordnet und ausgebildet sind, dass durch die Zufuhrvorrichtung (30) das Ausgangsmaterial (1) im Bereich der Eingangszone (E) in den Innenraum (I) des Ofenrohrs (20) zuführbar ist und ein Feststoffmaterial (2) sowie ein Gasgemisch (3) an der Ausgangsseite (A) des Ofenrohrs (20) abgebbar ist,
**dadurch gekennzeichnet, dass**
• das Ofenrohr (20) eine erste Zone (Z1) und eine zweite Zone (Z2) umfasst, wobei sich die erste Zone (Z1) in einem Bereich zwischen der Eingangszone (E) und der zweiten Zone (Z2) befindet, und wobei sich die zweite Zone (Z2) in einem Bereich zwischen der ersten Zone (Z1) und der Ausgangsseite (A) befindet,
• das Ofenrohr (20) einen Kompensator (21) umfasst, der zur Kompensation unterschiedlicher thermisch bedingter Ausdehnungen der ersten Zone (Z1) und der zweiten Zone (Z2) ausgelegt ist,
• ein Gasführungssystem (40) an der Ausgangsseite (A) des Ofenrohrs (20) angeordnet ist, das zum Weiterleiten des Gasgemischs (3) ausgelegt ist,
• ein Gasmonitor (41) im Bereich des Gasführungssystems (40) angeordnet ist, wobei der Gasmonitor (41) dazu ausgelegt ist den Anteil an Wasserstoff in dem Gasgemisch (3) zu überwachen,
wobei die Wasserzufuhr (31) in Abhängigkeit von dem Anteil an Wasserstoff in dem Gasgemisch (3) regelbar ist.

2. Vorrichtung (100) nach Anspruch 1, **dadurch gekennzeichnet, dass** der Kompensator (21) in einem Übergangsbereich zwischen der ersten Zone (Z1) und der zweiten Zone (Z2) angeordnet ist.

3. Vorrichtung (100) nach Anspruch 1 oder 2, **dadurch gekennzeichnet, dass** der Kompensator (21) mit dem Ofenrohr (20) verbunden ist und gleitend in Bezug zu einem stationären Auflager (50) ausgelegt ist, wobei es im Falle von thermisch bedingten Ausdehnungen zu einer Verschiebung des Kompensators (21) relativ zu dem Auflager (50) kommt.

4. Vorrichtung (100) nach Anspruch 1, 2 oder 3, **dadurch gekennzeichnet, dass** das Ofenrohr (20) im Bereich der Eingangszone (E) und/oder der Ausgangsseite (A) gleitend gelagert ist, um thermisch bedingte Längenausdehnungen des Ofenrohrs (20) zu ermöglichen.

5. Vorrichtung (100) nach einem der Ansprüche 1 bis 4, **dadurch gekennzeichnet, dass** im Bereich der Wasserzufuhr (31) ein Stellglied (32) angeordnet ist, das er ermöglicht die Wasserzufuhr (31) mittels einer Regelgrösse (S1) zu regeln, die von dem Gasmonitor (41) bereit gestellt wird.

6. Vorrichtung (100) nach einem der Ansprüche 1 bis 5, **dadurch gekennzeichnet, dass** das Ofenrohr (20) im Bereich der ersten Zone (Z1) mit einer Vorheizung (27.1), vorzugsweise einer elektrischen Vorheizung, versehen ist, um das Ausgangsmaterial (1) im Bereich der ersten Zone (Z1) auf eine Temperatur zwischen 300 Grad Celsius und 900 Grad Celsius bringen zu können, wobei die Temperatur vorzugsweise zwischen 600 Grad Celsius und 850 Grad Celsius liegt.

7. Vorrichtung (100) nach einem der Ansprüche 1 bis 5, **dadurch gekennzeichnet, dass** das Ofenrohr (20) im Bereich der ersten Zone (Z1) ein temperaturfestes Metall oder eine temperaturfeste Metalllegierung umfasst, wobei vorzugsweise eine Nickel-Legierung und besonders vorzugsweise Inconel oder eine Inconel-Legierung zum Einsatz kommt.

8. Vorrichtung (100) nach einem der Ansprüche 1 bis 5 oder nach Anspruch 6, **dadurch gekennzeichnet, dass** das Ofenrohr (20) im Bereich der zweiten Zone (Z2) mit einer Hauptheizung (27.2), vorzugsweise einer elektrischen Heizung, versehen ist, um das Ausgangsmaterial (1) im Bereich der zweiten Zone (Z2) auf eine Hochtemperatur bringen zu können, die oberhalb von 1000 Grad Celsius liegt und die vorzugsweise im Bereich zwischen 1100 Grad Celsius und 1300 Grad Celsius liegt.

9. Vorrichtung (100) nach Anspruch 8, **dadurch gekennzeichnet, dass** das Ofenrohr (20) im Bereich der zweiten Zone (Z2) ein Material umfasst, das als Schutz gegen aggressive Gase und die Hochtemperatur im Inneren (I) des Ofenrohrs (20) dient.

10. Vorrichtung (100) nach Anspruch 8, **dadurch gekennzeichnet, dass** das Ofenrohr (20) im Bereich der zweiten Zone (Z2)
- ein temperaturfestes Metall mit hochtemperaturfester Keramikbeschichtung,
- ein temperaturfestes Metall mit hochtemperaturfester Keramikarmierung,
- ein temperaturfestes Metall mit hochtemperaturfestem Keramikzuschlag,
- ein hochtemperaturfester Verbund aus Metall und Keramik, oder
- eine hochtemperaturfeste Keramik umfasst,
wobei die Keramik vorzugsweise eines der Bestandteile der folgenden Gruppe umfasst: Aluminiumoxid (Al₂O₃), Siliziumkarbid (SiC), Siliziumnitrid (Si₃N₄).

11. Vorrichtung (100) nach einem der Ansprüche 1 bis 5 oder nach Anspruch 6 oder nach Anspruch 8, **dadurch gekennzeichnet, dass** die Wasserzufuhr (31) so im Bereich der Zufuhrvorrichtung (30) angeordnet ist, dass sie einen regelbaren Wasseranteil (W) dem Ausgangsmaterial (1) hinzufügen kann, bevor das Ausgangsmaterial (1) in das Ofenrohr (20) gelangt.

12. Vorrichtung (100) nach einem der vorhergehenden Ansprüche, **dadurch gekennzeichnet, dass** im Innenraum (I) des Ofenrohrs (20) eine Förderschnecke und/oder Förderschaufeln (24) angeordnet ist/sind, die dazu ausgelegt ist/sind Ausgangsmaterial (1) durch das Ofenrohr (20) von der Eingangszone (E) zur Ausgangsseite (1) zu fördern indem das Ofenrohr (20) um seine Rotationsachse (R) gedreht wird, wobei die Förderschnecke und/oder Förderschaufeln (24) im Bereich der ersten Zone (Z1) vorzugsweise eine temperaturfeste Metalllegierung und im Bereich der zweiten Zone (Z2) vorzugsweise ein hochtemperaturfeste Keramik umfasst/en.

13. Vorrichtung (100) nach Anspruch 1, 2 oder 3, **dadurch gekennzeichnet, dass** der Kompensator (21) vorzugsweise
- ein Glimmermaterial, vorzugsweise Phlogopit-Glimmer,
- eine anorganisch gebundene Glas/Glimmer-Kombination umfasst,
das in einem Bereich zwischen dem Material der ersten Zone (Z1) und dem Material der zweiten Zone (Z2) angeordnet ist.

14. Vorrichtung (100) nach einem der vorhergehenden Ansprüche, **dadurch gekennzeichnet, dass** ein Gasmanometer als Gasmonitor dient.

15. Vorrichtung (100) nach einem der vorhergehenden Ansprüche, **dadurch gekennzeichnet, dass** im Bereich des Gasführungssystems (40) ein Gaswäscher (42) angeordnet ist, der dazu ausgelegt ist Verschmutzungen und/oder Stickoxide und/oder Schwermetalle aus dem Gasgemisch (3) abzutrennen.

## Claims

1. Device (100) for reacting an organic starting material (1) to give a gas which comprises hydrogen, with:
- a feed device (30),
- a tubular furnace (20) with an entry zone (E), an interior space (I), an axis of rotation (R) and an exit side (A),
- a water feed (31) which is arranged in the region of the feed device (30) or entry zone (E) in order to permit the addition of water (W) to the starting material (1),
wherein the feed device (30) and the tubular furnace (20) are arranged and designed in such a way that via the feed device (30) it is possible to feed the starting material (1) in the region of the entry zone (E) into the interior space (I) of the tubular furnace (20), and a solid material (2) as well as gas mixture (3) can be discharged at the exit side (A) of the tubular furnace (20),
**characterised in that**
- the tubular furnace (20) comprises a first zone (Z1) and a second zone (Z2), the first zone (Z1) being in a region between the entry zone (E) and the second zone (Z2) and the second zone (Z2) being in a region between the first zone (Z1) and the exit side (A),
- the tubular furnace (20) comprises a compensator (21) which is designed for the compensation of different thermally-induced expansions of the first zone (Z1) and the second zone (Z2),
- a gas-conducting system (40) designed for conducing the gas mixture (3) onward is arranged at the exit side (A) of the tubular furnace (20),
- a gas monitor (41) is arranged in the region of the gas-conducting system (40), wherein the gas monitor (41) is designed to monitor the content of hydrogen in the gas mixture (3),
wherein the water feed (31) can be regulated as a function of the content of hydrogen in the gas mixture (3).

2. Device (100) according to claim 1 **characterised in that** the compensator (21) is arranged in a transition area between the first zone (Z1) and the second zone (Z2).

3. Device (100) according to claim 1 or 2 **characterised in that** the compensator (21) is connected to the tubular furnace (20) and designed to slide in relation to a stationary bearing (50), wherein in the event of thermally -induced expansion the compensator (21) is displaced relative to the bearing (50).

4. Device (100) according to claim 1, 2 or 3 **characterised in that** the tubular furnace (20) is supported in a sliding manner in the region of the entry zone (E) and/or the exit zone (A) in order to permit thermally-induced longitudinal expansion of the tubular furnace (20).

5. Device (100) according to any one of claims 1 to 4 **characterised in that** in the area of the water feed (31) an actuator (32) is arranged which makes it possible to regulate the water feed (31) by way of a control variable (S1) which is provided by the gas monitor (41).

6. Device (100) according to any one of claims 1 to 5 **characterised in that** in the region of the first zone (Z1) the tubular furnace (20) is provided with a preheating system (27.1), preferably an electrical preheating system, in order to bring the starting material (1) in the region of the first zone (Z1) up to a temperature of between 300 degrees Celsius and 900 degrees Celsius, wherein preferably the temperature is between 600 degrees Celsius and 850 degrees Celsius.

7. Device (100) according to any one of claims 1 to 5 **characterised in that** in the region of a first zone (Z1) the tubular furnace (20) comprises a temperature-resistant metal or a temperature-resistant metal alloy, wherein preferably a nickel alloy and particularly preferably Inconel or an Inconel alloy is used.

8. Device (100) according to any one of claims 1 to 5 or according to claim 6, **characterised in that** in the region of the second zone (Z2) the tubular furnace (20) is provided with a main heating system (27.2), preferably an electrical heating system in order to be able to bring the starting material (1) in the region of the second zone (Z2) up to a high temperature which is over 1000 degrees Celsius and is preferably in a range between 1100 degrees Celsius and 1300 degrees Celsius.

9. Device (100) according to claim 8 **characterised in that** in the region of the second zone (Z2) the tubular furnace (20) comprises a material that serves to protect against aggressive gases and the high temperature in the interior (I) of the tubular furnace (20).

10. Device (100) according to claim 8, **characterised in that** in the region of the second zone (Z2) the tubular furnace comprises
- a temperature-resistant metal with a high temperature-resistant ceramic coating,
- a temperature-resistant metal with high temperature-resistant ceramic reinforcement,
- a temperature-resistant metal with high temperature-resistant ceramic aggregate,
- a high temperature-resistant compound of metal and ceramic, or
- a high temperature-resistant ceramic material,
wherein the ceramic material preferably comprises one of the components of the following group: aluminium oxide (Al₂O₃), silicon carbide (SiC), silicon nitride (Si₃N₄).

11. Device (100) according to any one of claims 1 to 5 or according to claim 6 **characterised in that** the water feed (31) is arranged in the region of the feed device (30) in such a way that it can add a regulable quantity of water (W) to the starting material (1) before the starting material (1) is fed into the tubular furnace (20).

12. Device (100) according to any one of the preceding claims **characterised in that** arranged in the interior space (I) of the tubular furnace (20) is/are a conveying worm and/or conveying vanes (24) which is/are designed to convey the starting material (1) through the tubular furnace (20) from the entry zone (E) to the exit side (1) **in that** the tubular furnace (20) is turned about its axis of rotation (R), wherein in the region of the first zone (Z1) the conveying worm and/or the conveying vanes (24) preferably comprise(s) a temperature-resistant metal alloy and in the region of the second zone (Z2) preferably a high temperature-resistant ceramic material.

13. Device (100) according to claim 1, 2 or 3 **characterised in that** the compensator (21) preferably comprises
- a micaceous material, preferably phlogopite mica,
- an inorganically bound glass/mica combination,
which is arranged in a range between the material of the first zone (Z1) and the material of the second zone (Z2).

14. Device (100) according to any one of the preceding claims **characterised in that** a gas manometer acts as the gas monitor.

15. Device (100) according to any one of the preceding claims **characterised in that** in the region of gas-conducting system (40) a gas washer (42) is arranged which is designed to separate pollutants and/or nitric oxides and/or heavy metals from gas mixture (3).

## Revendications

1. Dispositif (100) destiné à transformer une matière organique de départ (1) en un gaz qui comprend une part d'hydrogène, comportant :
• un dispositif d'alimentation (30),
• un tube de four (20) avec une zone d'entrée (E), un espace intérieur (I), un axe de rotation (R) et avec un côté sortie (A),
• une alimentation d'eau (31), qui est placée dans la région du dispositif d'alimentation (30) ou de la zone d'entrée (E), pour pouvoir ajouter à la matière de départ (1) une part d'eau (W),
le dispositif d'alimentation (30) et le tube de four (20) étant placés et conçus de telle sorte, que par le dispositif d'alimentation (30), la matière de départ (1) puisse être alimentée dans la région de la zone d'entrée (E) dans l'espace intérieur (I) du tube de four (20) et qu'une matière solide (2) ainsi qu'un mélange gazeux (3) puissent être distribués du côté sortie (A) du tube de four (20),
**caractérisé en ce que**
• le tube de four (20) comprend une première zone (Z1) et une deuxième zone (Z2), la première zone (Z1) se trouvant dans une région entre la zone d'entrée (E) et la deuxième zone (Z2), et la deuxième zone (Z2) se trouvant dans une région entre la première zone (Z1) et le côté sortie (A),
• le tube de four (20) comprend un compensateur (21) qui est conçu pour compenser différentes dilatations d'origine thermique de la première zone (Z1) et de la deuxième zone (Z2),
• un système d'alimentation de gaz (40) qui est conçu pour retransférer le mélange gazeux (3) est placé du côté sortie (A) du tube de four (20),
• un moniteur des gaz (41) est placé dans la région du système d'alimentation de gaz (40), le moniteur des gaz (41) étant conçu pour superviser la part d'hydrogène dans le mélange gazeux (3),
l'alimentation d'eau (31) étant réglable en fonction de la part d'hydrogène dans le mélange gazeux (3).

2. Dispositif (100) selon la revendication 1, **caractérisé en ce que** le compensateur (21) est placé dans une région de passage entre la première zone (Z1) et la deuxième zone (Z2).

3. Dispositif (100) selon la revendication 1 ou 2, **caractérisé en ce que** le compensateur (21) est relié avec le tube de four (20) et est conçu de manière coulissante par rapport à un support (50} stationnaire, sachant que dans le cas d'une dilatation d'origine thermique, il s'effectue un déplacement du compensateur (21) par rapport au support (50).

4. Dispositif (100) selon la revendication 1, 2 ou 3, **caractérisé en ce que** le tube de four (20) est logé de manière coulissante dans la région de la zone d'entrée (E) et/ou du côté sortie (A), pour permettre des dilatations longitudinales d'origine thermique du tube de four (20).

5. Dispositif (100) selon l'une quelconque des revendications 1 à 4, **caractérisé en ce que** dans la région de l'alimentation d'eau (31) est placé un actionneur (32) qui permet de régler l'alimentation d'eau (31) au moyen d'une grandeur de réglage (S1) qui est mise à disposition par le moniteur des gaz (41).

6. Dispositif (100) selon l'une quelconque des revendications 1 à 5, **caractérisé en ce que** dans la région de la première zone (Z1), le tube de four (20) est muni d'un préchauffage (27.1), de préférence d'un préchauffage électrique, pour pouvoir amener la matière de départ (1) dans la région de la première zone (Z1) à une température comprise entre 300 degrés Celsius et 900 degrés Celsius, la température se situant de préférence entre 600 degrés Celsius et 850 degrés Celsius.

7. Dispositif (100) selon l'une quelconque des revendications 1 à 5, **caractérisé en ce que** dans la région de la première zone (Z1), le tube de four (20) comprend un métal résistant aux températures ou un alliage métallique résistant aux températures, de préférence un alliage de nickel et de manière particulièrement préférée, de l'Inconel ou un alliage d'Inconel étant mis en oeuvre.

8. Dispositif (100) selon l'une quelconque des revendications 1 à 5 ou selon la revendication 6, **caractérisé en ce que** dans la région de la deuxième zone (Z2), le tube de four (20) est muni d'un chauffage principal (27.2), de préférence d'un chauffage électrique, pour pouvoir amener la matière de départ (1) dans la région de la deuxième zone (22) à une température élevée qui est supérieure à 1000 degrés Celsius et qui se situe de préférence dans l'ordre compris entre 1100 degrés Celsius et 1300 degrés Celsius.

9. Dispositif (100) selon la revendication 8, **caractérisé en ce que** dans la région de la deuxième zone (Z2), le tube de four (20) comprend une matière qui sert de protection contre des gaz agressifs et contre la température élevée à l'intérieur (I) du tube de four (20).

10. Dispositif (100) selon la revendication 8, **caractérisé en ce que** dans la région de la deuxième zone (Z2), le tube de four (20) comprend
- un métal thermorésistant avec un revêtement en céramique résistant aux températures élevées,
- un métal thermorésistant avec une armature en céramique résistant aux températures élevées,
- un métal thermorésistant avec un apport en céramique résistant aux températures élevées,
- un composite métallique ou en céramique résistant aux températures élevées, ou
- une céramique résistant aux températures élevées,
la céramique comprenant de préférence l'un des composants du groupe suivant : oxyde d'aluminium (Al₂O₃), carbure de silicium (SiC), nitrure de silicium (Si₃N₄).

11. Dispositif (100) selon l'une quelconque des revendications 1 à 5 ou selon la revendication 6 ou selon la revendication 8, **caractérisé en ce que** l'alimentation d'eau (31) est placée dans la région du dispositif d'alimentation (30), de telle sorte qu'elle puisse ajouter une part d'eau (W) réglable à la matière de départ (1), avant que la matière de départ (1) n'arrive dans le tube de four (20).

12. Dispositif (100) selon l'une quelconque des revendications précédentes, **caractérisé en ce que** dans l'espace intérieur (I) du tube de four (20) est/sont placée(s) une vis convoyeuse et/ou des aubes convoyeuses (24) qui est/sont conçue(s) pour transporter de la matière de départ (1) à travers le tube de four (20), de la zone d'entrée (E) vers le côté sortie (1) en faisant tourner le tube de four (20) autour de son axe de rotation (R), dans la région de la première zone (Z1), la vis convoyeuse et/ou les aubes convoyeuses (24) comprenant de préférence un alliage métallique thermorésistant et dans la région de la deuxième zone (Z2), comprenant de préférence une céramique résistant aux températures élevées.

13. Dispositif (100) selon la revendication 1, 2 ou 3, **caractérisé en ce que** le compensateur (21) comprend de préférence
- une matière à base de mica, de préférence du mica phlogopite,
- une association anorganiquement liée de verre/mica,
qui est placée dans une région entre la matière de la première zone (Z1) et la matière de la deuxième zone (Z2).

14. Dispositif (100) selon l'une quelconque des revendications précédentes, **caractérisé en ce qu'**un manomètre à gaz fait office de moniteur des gaz.

15. Dispositif (100) selon l'une quelconque des revendications précédentes, **caractérisé en ce que** dans la région du système d'alimentation de gaz (40) est placé un épurateur de gaz (42) qui est conçu pour séparer des impuretés et/ou des oxydes nitriques et/ou des métaux lourds du mélange gazeux (3).
